# EUROPEAN PATENT SPECIFICATION

(11) **EP 3 683 006 B1**
(45) Date of publication and mention of the grant of the patent: **24.07.2024**
(21) Application number: 17925195.4
(22) Date of filing: 10.11.2017
(51) Int. Cl.: B23P 15/00, B21K 1/76, B21H 1/06, B21J 5/08, B23K 20/02, B23K 15/06, B21J 1/02, B21J 1/04

(54) **FORMING METHOD FOR MODULAR METAL CONSTRUCTION**
VERFAHREN ZUR HERSTELLUNG EINER MODULAREN METALLKONSTRUKTION
PROCÉDÉ DE FORMATION DE CONSTRUCTION MÉTALLIQUE MODULAIRE

(30) Priority: 15.09.2017 CN 201710839240
(43) Date of publication of application: 22.07.2020
(73) Proprietor: China Institute of Atomic Energy, Beijing 102413 (CN)
(72) Inventor: YAN, Chunguang, Beijing 102413 (CN); XU, Haitao, Beijing 102413 (CN); LIU, Qiang, Beijing 102413 (CN); LI, Yaping, Beijing 102413 (CN); SUN, Gang, Beijing 102413 (CN); LIU, Zhaoyang, Beijing 102413 (CN); WANG, Mingzheng, Beijing 102413 (CN); YANG, Kongli, Beijing 102413 (CN)
(74) Representative: Global IP Europe Patentanwaltskanzlei
(86) International application number: PCT/CN2017/110489
(87) International publication number: WO 2019/051979

(56) References cited:
- EP-A1- 3 006 787
- WO-A1-2016/150024
- CN-A- 1 205 257
- CN-A- 101 020 286
- CN-A- 105 618 506
- CN-A- 106 607 668
- CN-A- 107 626 868
- CN-A- 107 626 880
- CN-A- 107 876 674
- CN-B- 104 259 357
- US-A- 4 479 293

## Description

### Technical field

The invention relates to a manufacturing method for metals and alloys, in particular to a forming method for modular metal construction.

### Background

During preparation of a large billet of a metal or a metal composite material, the existing method is as follows: taking a casting blank, a forging blank and a rolling blank as elements, packaging a plurality of elements together after performing surface processing and cleaning, and maintaining the internal high-vacuum state; then applying a forge welding process with the characteristics of upsetting deformation, inter-forging heat preservation and multidirectional forging; and finally preparing a large metal block. As "a homogenous metal construction forming method" in Chinese patent application 201511026272.X, "a metal construction forming method" in 201511027492.4 as well as "a cylinder metal construction forming method" in 201511027686.4, the metals and alloys are manufactured using a one-time construction forming method. However, for large forgings (particularly the forgings of hundred tons or more), one-time construction forming is extremely difficult and the requirements on equipment are high. Once the weld joint fails in the construction process, the whole blank will be scrapped and the loss will be huge.

CN 104 259 357 B discloses a method for producing large-sized steel ingots. In the method, small-sized or medium-sized electroslag remelting steel ingots are prepared; then one end of the electroslag remelting steel ingot is determined to be a welding surface, and the welding surface is treated and protected; two small-sized electroslag remelting steel ingots are stacked together and heated at a high temperature; after heating, the combined steel ingot is upsetting deformation and pressure-maintained according to a certain forging ratio; after the upsetting deformation is completed, it is returned to the heating furnace for high-temperature heating and then heat preservation; the combined steel ingot can also be welded with other steel ingots. The above steps are repeated to finally obtain a large-sized steel ingot.

### Summary

The invention aims to provide a more viable, more reliable and safer manufacturing method for the construction forming of large blocks.

The technical scheme of the invention is as follows: the forming method for modular metal construction comprises the following steps:
(S1) preparing 2^{N} prefabricated blanks, N≥2;
(S2) welding the prefabricated blanks in pairs in a vacuum chamber to prepare 2^{N-1} level I modules;
(S3) performing upsetting deformation along the height direction and inter-forging heat preservation after heating the level I modules to prepare intermediate blanks;
(S4) welding the intermediate blanks in pairs in the vacuum chamber to prepare 2^{N-2} level II modules, and performing upsetting deformation along the height direction and inter-forging heat preservation after heating the level II modules;
(S5) if 2^{N-2} is more than 1, welding the intermediate blanks prepared in the step (S4) in pairs in the vacuum chamber to further prepare multilevel modules, performing upsetting deformation along the height direction and inter-forging heat preservation after heating the multilevel modules and repeating the step once or for multiple times until one blank is prepared;
(S6) processing the blank into a component or a part.

Further, in the above forming method for modular metal construction, the level I modules, the level II modules and the multilevel modules are hourglass-shaped modules.

Further, in the step (S2), the prefabricated blanks are made into frustum-shaped units, the small surfaces of the two frustum-shaped units are stacked together and vacuum electron beam welding is conducted to prepare the level I hourglass-shaped modules; and in the step (S4) or step (S5), the intermediate blanks are made into frustum-shaped units, the small surfaces of the two frustum-shaped units are stacked together and vacuum electron beam welding is conducted to prepare the level II hourglass-shaped modules or the multilevel hourglass-shaped modules.

Further, the height reduction of implementing upsetting deformation on the hourglass-shaped modules in the step (S3), step (S4) or step (S5) is equal to 30 to 55 percent of the total height of the blanks.

Preferably, the prefabricated blanks in the step (S1) are constructed by casting blank, forging blank or rolling blank elements and are formed through seal welding and forging; or the prefabricated blanks in the step (S1) are directly prepared from forging blanks by machining.

Further , it is preferable that frustum-shaped units can be of circular cone frustum shapes or rectangular pyramid frustum shapes, and smooth transition at the intermediate interface position of the two frustum-shaped units is realized.

Further, it is preferable that the depth of joints for vacuum electron beam welding is 20 to 50 mm.

Further, it is preferable that the height-diameter ratio of the hourglass-shaped modules is between 1 and 3.

Further, it is preferable that the blanks after upsetting in the step (S3), step(S4) or step (S5) are subjected to high-temperature diffusion bonding, wherein the heating temperature is not less than 1200 °C and the heat preservation time after temperature reaching stable is not less than 12 hours.

Further, it is preferable that the blank in the step (S6) is subjected to upsetting, punching, reaming and flatting to form an annular forge piece; or the blank is subjected to upsetting and pressure maintaining, rounding and reaming to form a pipe blank; or the blank is subjected to upsetting and pressure maintaining, rounding as well as upsetting and squaring to form a cubic plate blank.

The invention has the following beneficial effects: the forming method for modular metal construction provided by the invention is reliable and controllable in quality. Each module can be detected after being forged, so that the quality of modules is guaranteed; and multiple pieces can be put into production, so that the construction period is effectively reduced. The hourglass-shaped construction blank can centralize the deformation of the upsetting process around the interface position, and generation of the surface tensile stress is avoided, so that the blank is subjected to large pressure stress uniformly and the surface tensile stress state of the blank is obviously optimized. Meanwhile, the minimum section area of the hourglass-shaped blank is small, so pressure needed by forging can be effectively reduced. By the forming method for modular metal construction, the large metal construction forming yield can be increased and the production efficiency can be greatly improved under the condition of using presses with the same specifications; and furthermore, the bottleneck problem for the large construction forming forge piece in the manufacturing process is solved and the production cost is reduced.

### Brief Description of Drawings

FIG. 1 is a flow schematic diagram of the forming method for modular metal construction;
FIG. 2 is a flow schematic diagram of the forming method for metal construction of the example 1 of the invention; and
FIG. 3 is a flow schematic diagram of the forming method for metal construction of the example 2 of the invention.

### Description of Embodiments

The invention is described in details below with reference to the accompanying drawings and embodiments.

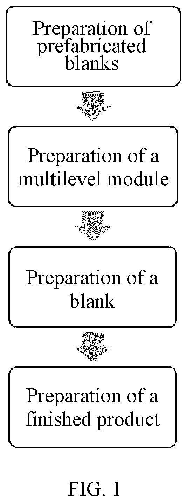

As shown in FIG. 1, in terms of the overall technological process, the forming method for modular metal construction comprises the following steps:
step (1) preparing 2^{N} prefabricated blanks, wherein N is an integer more than or equal to 2;
step (2) preparing multilevel modules,
(2-1) welding the prefabricated blanks in pairs in a vacuum chamber to prepare 2^{N-1} level I modules;
(2-2) performing upsetting deformation along a height direction and inter-forging heat preservation after heating the level I modules to prepare intermediate blanks;
(2-3) then welding the intermediate blanks in pairs in the vacuum chamber to prepare 2^{N-2} level II modules and performing upsetting deformation along the height direction and inter-forging heat preservation after heating the level II modules, wherein the step may be repeated for many times according to the number of the prefabricated blanks;
step (3) preparing a blank from the intermediate blanks; and
step (4) processing the blank into a component or a part.

The level I modules prepared from the prefabricated blanks as well as the level II modules or multilevel modules prepared from the intermediate blanks are hourglass-shaped modules, the advantages of the hourglass-shaped modules are completely utilized, the volume and the weight of the intermediate blanks are enlarged continuously, and finally the blank is prepared.

The prefabricated blanks can be constructed by casting blank, forging blank or rolling blank elements and be formed through seal welding and forging (refer to the description of "a homogeneous metal construction forming method" in CN201511026272.X for the method); or the prefabricated blanks are directly prepared from forging blanks by machining.

In the manufacturing process of the blank, one characteristic of the method is that a large forge piece is divided into a plurality of modules to perform construction by a multilevel modular manufacturing process. According to the process method, multiple pieces can be put into production, so that the production efficiency can be effectively improved and the construction period can be effectively guaranteed. The level number of the modules is determined by the number of the prefabricated blanks, the prefabricated blanks or the intermediate blanks are welded in pairs in the vacuum chamber to form special-shaped modules, the special-shaped modules are subjected to upsetting deformation and inter-forging heat preservation along the height direction, and the process step is repeated for many times to finally prepare one blank.

On the other hand, the characteristic of the invention is embodied in the special-shaped module structure adopted in the manufacturing process of the blank. The multilevel hourglass-shaped modules are prepared from the prefabricated blanks, the hourglass-shaped construction blanks can centralize the deformation in the upsetting process on the interface position, and generation of the surface tensile stress is avoided, so that the blank is subjected to big pressure stress uniformly and the surface tensile stress state of the blank is obviously improved. Therefore, the prefabricated blanks or the intermediate blanks are made into the frustum-shaped units firstly, and the frustum-shaped units can be prepared through a forging and/or machining mode. The small surfaces of the two frustum-shaped units are stacked together and vacuum electron beam welding is conducted to prepare the hourglass-shaped modules. In the embodiments, the frustum-shaped units can be of circular cone frustum shapes or rectangular pyramid frustum shapes (also can be of other frustum shapes, such as a hexagonal pyramid frustum and an octagonal pyramid frustum). The minimum section area of the hourglass-shaped blank is small, so pressure needed by forging can be effectively reduced. However, when the middle sunken position is narrow, fold defects will occur in the forging process; and when the middle sunken position is wide, the effect of reducing the forging pressure will be weakened. Thus, when the hourglass-shaped blank is designed, the size of the include angle between the lower bottom edgeand the waist edge of the longitudinal trapezoid section of each frustum-shaped unit should be taken into consideration so as to be within an ideal range. Meanwhile, smooth transition of the trapezoidal blank is conducted, so that the fact that the trapezoidal blank is folded at the intermediate interface position is avoided and a sharp corner at the junction of the two trapezoidal blanks is avoided. The junction of the two frustum-shaped units is realized by a vacuum electron beam welding mode, a to-be-welded surface is processed and cleaned and then the periphery of the to-be-welded blank in a vacuum chamber is subjected to vacuum electron beam seal welding, wherein the depth of joints for vacuum electron beam welding is 20 to 50 mm. The height-diameter ratio of the hourglass-shaped module formed after welding is between 1 and 3. The height-diameter ratio described here refers to the ratio of the total height of the hourglass-shaped module to the diameter of the bottom surface of the circular cone frustum (or the side length of the bottom surface of the rectangular pyramid frustum).

In the forging process of the blank, the blank is heated firstly, wherein the highest heating temperature is not less than 1200 °C; then the hourglass-shaped blank is subjected to upsetting deformation along the height direction; and the heated blank is placed on a press operating platform and is subjected to upsetting along the height direction, wherein the height reduction of the upsetting deformation is equal to 30 to 55 percent of the total height of the blank. Then, the blank after upsetting is subjected to high-temperature diffusion bonding and the blank after upsetting is sent back to a heating furnace to perform heating, wherein the heating temperature is not less than 1200 °C and the heat preservation time after temperature reaching stable is not less than 12 hours.

### Example 1

The target product of the example is a large annular forge piece.

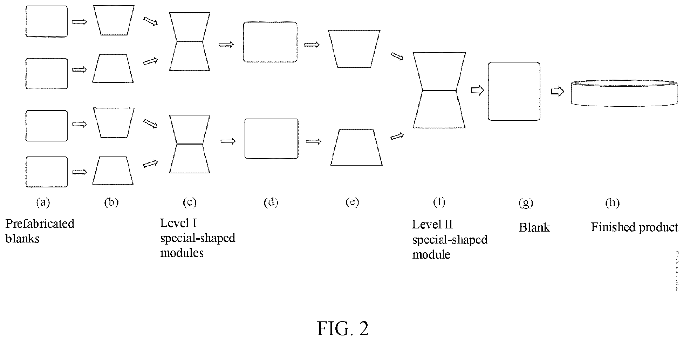

In the first step, steel ingots are obtained by a pouring mode and the steel ingots are heated and are subjected to cogging and forging to form prefabricated blanks, wherein the size of the prefabricated blanks is as follows: 1200 mm in diameter and 1500 mm in height, as shown in FIG. 2(a).

In the second step, the prefabricated blanks are heated before being forged, wherein the highest heating temperature is not less than 1200 °C. The prefabricated blanks are subjected to die forging to form level I frustum-shaped units, as shown in FIG. 2(b).

In the third step, the level I frustum-shaped units are subjected to vacuum electron beam welding. In a vacuum chamber, the superposed level I frustum-shaped unit blanks are subjected to vacuum electron beam seal welding to form level I hourglass-shaped modules, wherein the welding depth is 20 to 50 mm, as shown in FIG. 2(c).

In the fourth step, the welded level I hourglass-shaped modules are heated before being forged, wherein the highest heating temperature is not less than 1200 °C. The heated blanks are placed on a press operating platform, so that the height direction of the blanks is along a vertical direction. Upsetting is implemented along the height direction, wherein the height reduction is equal to 30 to 55 percent of the total height of the blanks. The blanks are subjected to high-temperature diffusion bonding. The blanks after upsetting are sent back to a heating furnace to perform heating, wherein the heating temperature is not less than 1200 °C and the heat preservation time after temperature reaching stable is not less than 12 hours. Then the blanks are subjected to rounding, as shown in FIG. 2(d).

In the fifth step, the blanks are heated before being forged, wherein the highest heating temperature is not less than 1200 °C. The blanks are subjected to die forging to form level II frustum-shaped units, as shown in FIG. 2(e).

In the sixth step, the level II frustum-shaped units are subjected to vacuum electron beam welding. In the vacuum chamber, the superposed level II frustum-shaped unit blanks are subjected to vacuum electron beam seal welding to form level II hourglass-shaped modules, wherein the welding depth is 20 to 50 mm, as shown in FIG. 2(f).

In the seventh step, the welded level II hourglass-shaped modules are heated before being forged, wherein the highest heating temperature is not less than 1200 °C. The heated blanks are placed on a press operating platform, so that the height direction of the blanks is along the vertical direction. Upsetting is implemented along the height direction, wherein the height reduction is equal to 30 to 55 percent of the total height of the blanks. The blanks are subjected to high-temperature diffusion bonding. The blanks after upsetting are sent back to the heating furnace to perform heating, wherein the heating temperature is not less than 1200 °C and the heat preservation time after temperature reaching stable is not less than 12 hours. Then the blanks are subjected to rounding to prepare a blank, as shown in FIG. 2(g).

In the eighth step, the blank is subjected to upsetting, punching, reaming and flatting. The blanks are processed on a 16-m ring rolling mill to obtain the final size, as shown in FIG. 2(h).

In the example, the fifth step to the seventh step can be repeatedly conducted, the intermediate blanks are made into multilevel hourglass-shaped modules and the multilevel hourglass-shaped modules are made into the blank.

### Example 2

The target product of the example is a large pipe blank.

In the first step, a stainless steel continuous casting plate blank prepared by a continuous casting mode is cut into 11 blanks with the specifications of 1500 mm * 1500 mm * 200 mm. The six surfaces of each continuous casting blank are machined and to-be-welded surfaces are cleaned, so that fresh metal surfaces are exposed.

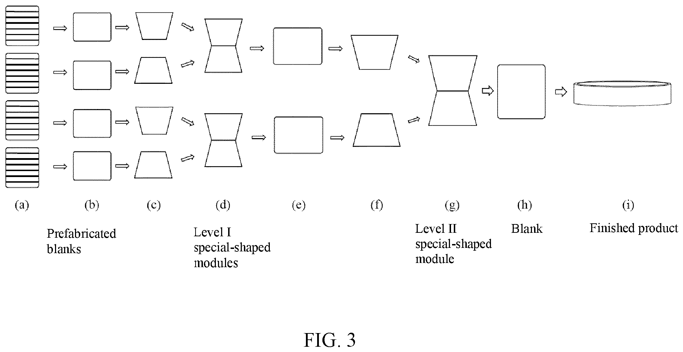

In the second step, the blanks are subjected to vacuum electron beam welding. In a vacuum chamber, the peripheries of the superposed blanks are subjected to vacuum electron beam seal welding, wherein the welding depth is 20 to 50 mm and the size after welding is 1500 mm in width, 1500 mm in length and 2200 mm in height, as shown in FIG. 3(a).

In the third step, the welded blanks are heated before being forged, wherein the highest heating temperature is not less than 1200 °C and the heating speed is required to be less than 100 °C/h. The heated blanks are placed on a press operating platform, so that the height direction of the blanks is along a vertical direction. Upsetting is implemented along the height direction, wherein the height reduction is equal to 30 to 55 percent of the total height of the blanks. The blanks are subjected to high-temperature diffusion bonding. The blanks after upsetting are sent back to a heating furnace to perform heating, wherein the heating temperature is not less than 1200 °C and the heat preservation time after temperature reaching stable is not less than 12 hours.

In the fourth step, the blanks are subjected to upsetting in three directions and are subjected to edge chamfering, chamfering and machining to form prefabricated blanks, as shown in FIG. 3 (b).

In the fifth step, the prefabricated blanks are heated before being forged, wherein the highest heating temperature is not less than 1200 °C. The prefabricated blanks are subjected to die forging to form level I frustum-shaped units, as shown in FIG. 3(c).

In the sixth step, the level I frustum-shaped units are subjected to vacuum electron beam welding. In a vacuum chamber, the superposed level I frustum-shaped unit blanks are subjected to vacuum electron beam seal welding to form level I hourglass-shaped modules, wherein the welding depth is 20 to 50 mm, as shown in FIG. 3(d).

In the seventh step, the welded special-shaped modules are heated before being forged, wherein the highest heating temperature is not less than 1200 °C. The heated blanks are placed on a press operating platform, so that the height direction of the blanks is along a vertical direction. Upsetting is implemented along the height direction, wherein the height reduction is equal to 30 to 55 percent of the total height of the blanks. The blanks are subjected to high-temperature diffusion bonding. The blanks after upsetting are sent back to a heating furnace to perform heating, wherein the heating temperature is not less than 1200 °C and the heat preservation time after temperature reaching stable is not less than 12 hours. Then the blanks are subjected to rounding, as shown in FIG. 3(e).

In the eight step, the blanks are heated before being forged, wherein the highest heating temperature is not less than 1200 °C. The blanks are subjected to die forging to form level II frustum-shaped units, as shown in FIG. 3(f).

In the ninth step, the level II frustum-shaped units are subjected to vacuum electron beam welding. In the vacuum chamber, the superposed level II frustum-shaped unit blanks are subjected to vacuum electron beam seal welding to form level II hourglass-shaped modules, wherein the welding depth is 20 to 50 mm, as shown in FIG. 3(g).

In the tenth step, the welded level II hourglass-shaped modules are heated before being forged, wherein the highest heating temperature is not less than 1200 °C. The heated blanks are placed on a press operating platform, so that the height direction of the blanks is along the vertical direction. Upsetting is implemented along the height direction, wherein the height reduction is equal to 30 to 55 percent of the total height of the blanks. The blanks are subjected to high-temperature diffusion bonding. The blanks after upsetting are sent back to a heating furnace to perform heating, wherein the heating temperature is not less than 1200 °C and the heat preservation time after temperature reaching stable is not less than 12 hours. Then the blanks are subjected to rounding to prepare a blank, as shown in FIG. 3(h).

In the eleventh step, the blank is subjected to upsetting and pressure maintaining, rounding as well as reaming to form a pipe blank with the final size, as shown in FIG. 3(i).

In the example, the eighth step to the tenth step can be repeatedly conducted, the intermediate blanks are made into multilevel hourglass-shaped modules and the multilevel hourglass-shaped modules are made into the blank.

In addition, the final products of the above examples are not limited to large annular forgings or pipe blanks and can be processed into other parts or components, such as cubic plate blanks.

Obviously, those skilled in the art can perform modifications and variations on the invention without departing from the scope of the claims. Thus, the invention is also intended to include the modifications and variations if the variations and modifications on the invention belong to the range of the claims of the invention as well as the equivalent technologies thereof.

## Claims

1. A forming method for modular metal construction comprising the following steps:
(S1) preparing 2^{N} prefabricated blanks, N≥2;
(S2) the prefabricated blanks are made into frustum-shaped units, the small surfaces of the two frustum-shaped units are stacked together and vacuum electron beam welding is conducted to prepare 2^{N-1} level I hourglass-shaped modules;
(S3) performing upsetting deformation along the height direction and inter-forging heat preservation after heating the level I hourglass-shaped modules to prepare intermediate blanks, the height reduction of implementing upsetting deformation on the hourglass-shaped modules is equal to 30 to 55 percent of the total height of the blanks;
(S4) the intermediate blanks prepared in the step (S3) are made into frustum-shaped units, the small surfaces of the two frustum-shaped units are stacked together and vacuum electron beam welding is conducted to prepare 2^{N-2} level II hourglass-shaped modules, and performing upsetting deformation along the height direction and inter-forging heat preservation after heating the level II hourglass-shaped modules, the height reduction of implementing upsetting deformation on the hourglass-shaped modules is equal to 30 to 55 percent of the total height of the blanks;
(S5) if 2^{N-2} is more than 1, the intermediate blanks prepared in the step (S4) are made into frustum-shaped units, the small surfaces of the two frustum-shaped units are stacked together and vacuum electron beam welding is conducted to prepare multilevel hourglass-shaped modules, performing upsetting deformation along the height direction and inter-forging heat preservation after heating the multilevel hourglass-shape modules, the height reduction of implementing upsetting deformation on the hourglass-shaped modules is equal to 30 to 55 percent of the total height of the blanks, and repeating the step once or for multiple times until one blank is prepared;
(S6) processing the blank into a component or a part.

2. The forming method for modular metal construction as claimed in claim 1, wherein the prefabricated blanks in the step (S1) are constructed by casting blank, forging blank or rolling blank elements and are formed through seal welding and forging; or the prefabricated blanks in the step (S1) are directly prepared from forging blanks by machining.

3. The forming method for modular metal construction as claimed in claim 1, wherein the frustum-shaped units can be of circular cone frustum shapes or rectangular pyramid frustum shapes, and smooth transition at the intermediate interface position of the two frustum-shaped units is realized.

4. The forming method for modular metal construction as claimed in claim 1, wherein the depth of joints for vacuum electron beam welding is 20 to 50 mm.

5. The forming method for modular metal construction as claimed in claim 1, wherein the height-diameter ratio of the hourglass-shaped modules is between 1 and 3.

6. The forming method for modular metal construction as claimed in claim 1, wherein the blanks after upsetting in the step (S3), step (S4) or step (S5) are subjected to high-temperature diffusion bonding, wherein the heating temperature is not less than 1200 °C and the heat preservation time after temperature reaching stable is not less than 12 hours.

7. The forming method for modular metal construction as claimed in claim 1, wherein the blank in the step (S6) is subjected to upsetting, punching, reaming and flatting to form an annular forge piece; or the blank is subjected to upsetting and pressure maintaining, rounding and reaming to form a pipe blank; or the blank is subjected to upsetting and pressure maintaining, rounding as well as upsetting and squaring to form a cubic plate blank.

## Patentansprüche

1. Herstellungsverfahren für eine modulare Metallkonstruktion, das die folgenden Schritte aufweist:
(S1) Herstellen von 2^{N} vorgefertigten Rohlingen, N≥2;
(S2) die vorgefertigten Rohlinge werden zu kegelstumpfförmigen Einheiten geformt, die kleinen Oberflächen der beiden kegelstumpfförmigen Einheiten werden aufeinander gestapelt und es wird ein Vakuum-Elektronenstrahlschweißen durchgeführt, um 2^{N-1} sanduhrförmige Module der Stufe I herzustellen;
(S3) Durchführen einer Stauchverformung entlang der Höhenrichtung und einer Zwischenschmiede-Wärmekonservierung nach dem Erwärmen der sanduhrförmigen Module der Stufe I, um Zwischenrohlinge herzustellen, wobei die Höhenreduzierung der Durchführung der Stauchverformung an den sanduhrförmigen Modulen 30 bis 55 Prozent der Gesamthöhe der Rohlinge beträgt;
(S4) die in Schritt (S3) hergestellten Zwischenrohlinge werden zu kegelstumpfförmigen Einheiten geformt, die kleinen Oberflächen der beiden kegelstumpfförmigen Einheiten werden aufeinander gestapelt und es wird ein Vakuum-Elektronenstrahlschweißen durchgeführt, um 2^{N-2} sanduhrförmige Module der Stufe II herzustellen, und es wird eine Stauchverformung entlang der Höhenrichtung und eine Zwischenschmiede-Wärmekonservierung nach dem Erwärmen der sanduhrförmigen Module der Stufe II durchgeführt, wobei die Höhenreduzierung der Durchführung der Stauchverformung an den sanduhrförmigen Modulen 30 bis 55 Prozent der Gesamthöhe der Rohlinge beträgt;
(S5) wenn 2^{N-2} größer als 1 ist, werden die im Schritt (S4) hergestellten Zwischenrohlinge zu kegelstumpfförmigen Einheiten geformt, die kleinen Oberflächen der beiden kegelstumpfförmigen Einheiten werden aufeinander gestapelt und das Vakuum-Elektronenstrahlschweißen wird durchgeführt, um mehrstufige sanduhrförmige Module herzustellen, Durchführen einer Stauchverformung entlang der Höhenrichtung und einer Zwischenschmiede-Wärmekonservierung nach dem Erwärmen der mehrstufigen sanduhrförmigen Module, wobei die Höhenreduzierung der Durchführung der Stauchverformung an den sanduhrförmigen Modulen 30 bis 55 Prozent der Gesamthöhe der Rohlinge beträgt, und Wiederholen des Schritts einmal oder mehrmals, bis ein Rohling hergestellt ist;
(S6) Verarbeiten des Rohlings zu einer Komponente oder einem Teil.

2. Herstellungsverfahren für eine modulare Metallkonstruktion nach Anspruch 1, wobei die vorgefertigten Rohlinge im Schritt (S1) durch Gussrohlinge, Schmiederohlinge oder Walzrohlinge konstruiert und durch Dichtschweißen und Schmieden umgeformt werden; oder die vorgefertigten Rohlinge im Schritt (S1) direkt aus Schmiederohlingen durch Bearbeitung hergestellt werden.

3. Herstellungsverfahren für eine modulare Metallkonstruktion nach Anspruch 1, wobei die kegelstumpfförmigen Einheiten kreisförmige Kegelstumpfformen oder rechteckige Pyramidenstumpfformen haben können und ein glatter Übergang an der Zwischengrenzflächenpostion der beiden kegelstumpfförmigen Einheiten realisiert wird.

4. Herstellungsverfahren für eine modulare Metallkonstruktion nach Anspruch 1, wobei die Tiefe der Fugen beim Vakuum-Elektronenstrahlschweißen 20 bis 50 mm beträgt.

5. Herstellungsverfahren für eine modulare Metallkonstruktion nach Anspruch 1, wobei das Höhen-Durchmesser-Verhältnis der sanduhrförmigen Module zwischen 1 und 3 liegt.

6. Herstellungsverfahren für eine modulare Metallkonstruktion nach Anspruch 1, wobei die Rohlinge nach dem Stauchen in Schritt (S3), Schritt (S4) oder Schritt (S5) einem Hochtemperatur-Diffusionsschweißen unterzogen werden, wobei die Heiztemperatur nicht weniger als 1200°C beträgt und die Warmhaltezeit nach Erreichen der stabilen Temperatur nicht weniger als 12 Stunden beträgt.

7. Herstellungsverfahren für eine modulare Metallkonstruktion nach Anspruch 1, wobei der Rohling im Schritt (S6) einem Stauchen, Lochen, Reiben und Abflachen unterzogen wird, um ein ringförmiges Schmiedestück zu bilden, oder der Rohling einem Stauchen und Druckhalten, Runden und Reiben unterzogen wird, um einen Rohrrohling zu bilden, oder der Rohling einem Stauchen und Druckhalten, Runden sowie Stauchen und Rechtwinkligschneiden unterzogen wird, um einen würfelförmigen Plattenrohling zu bilden.

## Revendications

1. Procédé de formage pour construction métallique modulaire, comprenant les étapes suivantes :
(S1) préparation de 2^{N} ébauches préfabriquées, N ≥ 2 ;
(S2) les ébauches préfabriquées sont transformées en unités de forme tronconique, les deux unités de forme tronconique sont empilées par les petites surfaces et un soudage par faisceau d'électrons sous vide est effectué pour préparer 2^{N-1} modules en forme de sablier de niveau I ;
(S3) déformation par refoulement dans le sens de la hauteur et conservation de chaleur entre forgeages après chauffage des modules en forme de sablier de niveau I pour préparer des ébauches intermédiaires, la réduction de hauteur par déformation par refoulement sur les modules en forme de sablier représentant 30 à 55 pour cent de la hauteur totale des ébauches ;
(S4) les ébauches intermédiaires préparées lors de l'étape (S3) sont transformées en unités de forme tronconique, les deux unités de forme tronconique sont empilées par les petites surfaces et un soudage par faisceau d'électrons sous vide est effectué pour préparer 2^{N-2} modules en forme de sablier de niveau II, et une déformation par refoulement dans le sens de la hauteur est effectuée, ainsi qu'une conservation de chaleur entre forgeages après chauffage des modules en forme de sablier de niveau II, la réduction de hauteur par déformation par refoulement sur les modules en forme de sablier représentant 30 à 55 pour cent de la hauteur totale des ébauches ;
(S5) si 2^{N-2} est supérieur à 1, les ébauches intermédiaires préparées lors de l'étape (S4) sont transformées en unités de forme tronconique, les deux unités de forme tronconique sont empilées par les petites surfaces et un soudage par faisceau d'électrons sous vide est effectué pour préparer des modules en forme de sablier de plusieurs niveaux, une déformation par refoulement dans le sens de la hauteur est effectuée, et la chaleur entre forgeages est conservée après chauffage des modules en forme de sablier de plusieurs niveaux, la réduction de hauteur par déformation par refoulement sur les modules en forme de sablier représentant 30 à 55 % de la hauteur totale des ébauches, et l'étape est reproduite une ou plusieurs fois jusqu'à ce qu'une ébauche soit préparée ;
(S6) transformation de l'ébauche en un composant ou une pièce.

2. Procédé de formage pour construction métallique modulaire selon la revendication 1, où les ébauches préfabriquées lors de l'étape (S1) sont construites par des ébauches de coulée, de forgeage ou de laminage, et sont formées par soudage d'étanchéité et par forgeage ; ou les ébauches préfabriquées lors de l'étape (S1) sont préparées directement à partir d'ébauches de forgeage par usinage.

3. Procédé de formage pour construction métallique modulaire selon la revendication 1, où les unités de forme tronconique peuvent être en forme de pyramide circulaire ou de pyramide rectangulaire, et où une transition continue est réalisée à l'emplacement d'interface intermédiaire des deux unités de forme tronconique.

4. Procédé de formage pour construction métallique modulaire selon la revendication 1, où la profondeur des joints pour le soudage par faisceau d'électrons sous vide est de 20 à 50 mm.

5. Procédé de formage pour construction métallique modulaire selon la revendication 1, où le rapport hauteur-diamètre des modules en forme de sablier est compris entre 1 et 3.

6. Procédé de formage pour construction métallique modulaire selon la revendication 1, où, après refoulement lors de l'étape (S3), lors de l'étape (S4) ou lors de l'étape (S5), les ébauches sont soumises à un soudage par diffusion à haute température, la température de chauffage n'étant pas inférieure à 1200 °C et le temps de conservation de chaleur après stabilisation de la température n'étant pas inférieur à 12 heures.

7. Procédé de formage pour construction métallique modulaire selon la revendication 1, où, lors de l'étape (S6), l'ébauche est soumise à refoulement, poinçonnage, alésage et aplatissement pour former une pièce de forge annulaire ; ou l'ébauche est soumise à refoulement et maintien de pression, à arrondissage et alésage pour former une ébauche de tuyau ; ou l'ébauche est soumise à refoulement et maintien de pression, arrondissage ainsi qu'à refoulement et à équarrissage pour former une ébauche de plaque cubique.
